(19)

**Europäisches Patentamt**
**European Patent Office**
**Office européen des brevets**

(11)  **EP 3 930 280 B1**

(12)  **EUROPEAN PATENT SPECIFICATION**

(45) Date of publication and mention
of the grant of the patent:
**20.08.2025  Bulletin 2025/34**

(21) Application number: **20182261.6**

(22) Date of filing: **25.06.2020**

(51) International Patent Classification (IPC):
*H04L 9/40* (2022.01)        *H04L 45/02* (2022.01)
*G06F 21/55* (2013.01)       *G06F 21/57* (2013.01)

(52) Cooperative Patent Classification (CPC):
**H04L 63/1425; G06F 21/552; H04L 45/02;**
G06F 21/577; H04L 63/1441

(54) **FORENSICALLY ANALYSING AND DETERMINING A NETWORK ASSOCIATED WITH A NETWORK SECURITY THREAT**

FORENSISCHE ANALYSE UND BESTIMMUNG EINES MIT EINER NETZWERKSICHERHEITSBEDROHUNG ASSOZIIERTEN NETZWERKS

ANALYSE JUDICIAIRE ET DÉTERMINATION D'UN RÉSEAU ASSOCIÉ À UNE MENACE DE SÉCURITÉ RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.12.2021  Bulletin 2021/52**

(73) Proprietor: **Vocalink International Limited**
**London**
**EC4R 3AB (GB)**

(72) Inventors:
 • **IX, Sebastian**
   **London, E2 9NL (GB)**
 • **DEWAR, Michael Alan**
   **Richmond, Surrey TW10 5AA (GB)**

 • **PATEL, Prina Rajendra Kumar**
   **London, W13 8HB (GB)**
 • **DIVITT, David Wiliam**
   **London, N7 6BP (GB)**
 • **PRAJS, Szymon Nikodem**
   **Ascot, Berkshire SL5 8FE (GB)**
 • **HOGAN, James**
   **London, SW4 BA (GB)**

(74) Representative: **Gill Jennings & Every LLP**
**The Broadgate Tower**
**20 Primrose Street**
**London EC2A 2ES (GB)**

(56) References cited:
**US-A1- 2015 326 460     US-A1- 2018 367 548**
**US-B2- 10 326 673**

## Description

## FIELD OF INVENTION

This invention relates generally to data security, and specifically to the determination of a security threat in a network.

## BACKGROUND

Networks may involve multiple parties with many different connections between the entities in the network. When a security threat occurs it may be essential to determine which network entities have received the data associated with the security threat and from where it has originated.

This is particularly an issue as it will only be identified that a security threat has occurred a period of time after the security threat actually took place. In a short period of time the affected data may have been passed between numerous entities in the network. This makes it difficult to trace the path of the data has taken. Even in networks involving a small number of parties it can become difficult to trace the movement of the data from one entity to another.

Likewise, if it is identified that an entity within a network has data associated with it that has not been legitimately acquired, it can be a hard task to determine from where this data originated. This prevents the determination of the source of the threat, and means that the data cannot be returned or the necessary action taken to ensure no further data breaches.

The present invention aims to solve one or more of the problems mentioned above, and in particular may enable the analysis of a network to provide an identification of where data associated with a network security threat has originated.

US 2018/0367548 A1 discusses graph-based detection systems and techniques to identify potential malicious lateral movement paths across a computer network. US 10,326,673 B2 discusses techniques for determining network topologies.

## SUMMARY OF THE INVENTION

In a first aspect of the invention there is provided a computer-implemented method for forensically analysing and determining a network associated with a network security threat, the method comprising: (a) obtaining details of a flagged network event comprising data associated with a network security threat, the network event being between a first dataset and a destination dataset; (b) tracing the data associated with the network security threat from the first dataset to a further dataset, the tracing involving obtaining details of at least one past network event between the first dataset and the further dataset; (c) comparing details of the further dataset to predefined criteria to identify if the further dataset is an intermediate dataset or a source dataset from which the data originated and adding the details of the further dataset to a forensic report; (d) outputting the forensic report.

Preferably, the method further comprises if the further dataset is identified to be an intermediate dataset repeating steps b) to c) starting from that intermediate dataset until a source dataset associated with the intermediate dataset is identified, else if the further dataset is identified to be a source dataset adding details of the source dataset to the forensic report comprising details of the determined network associated with the security threat.

Preferably, the method further comprises once at least one source dataset has been identified: starting from the at least one source dataset or its associated intermediate dataset, tracing the data associated with the network security threat to identify one or more datasets that are different to the first and further dataset, the tracing involving identifying network events which led the one or more datasets to including the data associated with the network security threat; adding the identified one or more datasets to the forensic report.

Preferably, the predefined criteria are one or more of: whether there are any further past network events associated with data arriving at the further dataset, the number of past network events that were associated with data transfer to or from the further dataset, the time difference between past network events that were associated with data transfer to or from the further dataset, how long the data has been present in the further dataset, a geographical location associated with the further dataset.

Preferably, the details of the determined network associated with the security threat comprises a map of the network, and/or a list of past network events between the identified datasets.

Preferably, the step of obtaining details of past network events between the first dataset and the further dataset involves identifying past network events which fall within a predefined time period.

The network is a financial network and the network security threat is the unauthorised modification of routing information within the financial network.

Preferably, the method further comprises determining a procedure for returning the data associated with the network security threat at the first dataset to each of the identified source datasets.

Preferably, when there is more than one source dataset in the network, the step of determining a procedure for returning comprises:

    i. determining which network event between the first dataset and the further dataset occurred first;
    ii. adding details of this network event to the forensic report for future use of returning the data associated with the network security threat associated with this network event to the further dataset; and

iii. if it is determined that some data associated with the network security threat will remain in the first dataset after the future returning repeating steps (i) to (iii).

Preferably, when the further dataset that the data is to be returned to is an intermediate dataset:

iv. determining at this intermediate dataset which network event between this intermediate dataset and the further dataset occurred first;
v. adding details of this network event to the forensic report for future use of returning the data associated with the network security threat associated with this network event to the further dataset associated with this network event;
vi. if it is determined that some data associated with the network security threat will remain in the intermediate dataset after the future returning repeating steps (iv) to (vi).

Preferably, when there is more than one source dataset in the network, the step of determining a procedure for returning comprises: identifying the contribution each network event between the first dataset and the further datasets made to the data associated with the network security threat at the first dataset; and adding details of these network event and their contribution to the forensic report for future use of returning the data associated with the network security threat associated with each network event to the further datasets based on their identified contribution.

Preferably, the method further comprises for each of the datasets that the data is to be returned to that are an intermediate dataset: identifying a contribution each network event between the intermediate dataset and further datasets made to the data associated with the network security threat at the intermediate dataset; adding details of these network event and their contribution to the forensic report for future use of returning the data associated with the network security threat associated with each network event to the further datasets based on their identified contribution.

Preferably, the method further comprises returning the data based on the determined procedure for returning.

In a second aspect there is provided a system configured to forensically analyse and determining a network associated with a network security threat, the system comprising: an identifying module configured to obtain details of an flagged network event comprising data associated with a network security threat, the network event being between a first dataset and a destination dataset; a tracing module configured to trace the data associated with the network security threat from the first dataset to a further dataset, the tracing involving obtaining details of past network events between the first dataset and the further dataset; a dataset type determining module configured to compare details of the further dataset to predefined criteria to identify if the further dataset is an intermediate dataset or a source dataset from which the data originated; a forensic report generating module configured to output a forensic report comprising details of the determined network associated with the security threat when the further dataset is identified to be a source dataset.

The system of the second aspect may be configured to perform the method of the first aspect.

According to a third aspect there is provided a non-transitory computer-readable storage medium storing instructions thereon which, when executed by a processor, cause the processor to perform a method for forensically analysing and determining a network associated with a network security threat, the method comprising: (a) obtaining details of a flagged network event comprising data associated with a network security threat, the network event being between a first dataset and a destination dataset; (b) tracing the data associated with the network security threat from the first dataset to a further dataset, the tracing involving obtaining details of at least one past network event between the first dataset and the further dataset; (c) comparing details of the further dataset to predefined criteria to identify if the further dataset is an intermediate dataset or a source dataset from which the data originated and adding the details of the further dataset to a forensic report; (d) outputting the forensic report.

## BRIEF DESCRIPTION OF THE DRAWINGS

Embodiments of the present invention are described below, by way of example only, with reference to the accompanying drawings, in which:

Figure 1 is a schematic diagram of a portion of a network in accordance with an embodiment of the invention;

Figure 2 is a first flow chart setting out a method in accordance with an embodiment of the invention;

Figure 3 is a schematic diagram of a network in accordance with an embodiment of the invention;

Figure 4 is a second flow chart setting out a method in accordance with an embodiment of the invention;

Figure 5 is a schematic diagram of returning data to nodes of a network in accordance with an embodiment of the invention;

Figure 6 is a schematic diagram of returning data to nodes of a network in accordance with an embodiment of the invention;

Figure 7 is a schematic diagram of a system capable of implementing the invention and in accordance with an embodiment of the invention;

Figure 8 shows in schematic form a data processing device that is suitable for performing the functions of any data processing device within the system shown in Figure 1.

## DETAILED DESCRIPTION OF EMBODIMENTS

As used herein, the followings terms have the following meanings:
Dataset: a dataset is an entity within a network which has associated with it one or more data. The data may be stored in one or more databases associated with the dataset. Each data entry in the dataset comprises a value and an associated timestamp.

Network security threat: is an event within a network which leads to an unauthorised access, altering or movement of data within the network. An unauthorised action is any action that is not approved by the party that is in control of the dataset. This may include unauthorised access of data and the sending of said data to a dataset that is not authorised to hold said data.

Network event: a network event is an event between datasets in the network. A network event involves the movement of data from one dataset to another. A network event may be an unauthorised movement of data between datasets.

Flagged network event: this is a network event which is initially identified to have sent data associated with the network security threat. It is a network event that is between the first dataset and the destination dataset. The flagged network event is not authorised to have sent said data. The flagged network event is the network event which may presently comprise the data acquired via the network security threat at the time that the forensic analysis of the network is being performed, or the network event that most recently comprised said data. The destination dataset may have received the data associated with the network security event from the first dataset.

Destination dataset: this is the dataset to which the flagged network event is sending the data associated with the network security threat to. It is the intended destination of the flagged network event. It is not authorised to receive said data. The destination dataset may comprise the data associated with the network security threat from the flagged network event. Alternatively, the destination dataset may not have received the data in the flagged network event.

First dataset: this is the dataset from which the flagged network event is sending the data associated with the network security threat to the destination dataset.

Source dataset: this is a dataset from which the data associated with the network security threat originated when it was accessed/obtained without authorisation. The source dataset may be a dataset that has comprised the data for a certain period of time. Alternatively, or in addition, the source dataset may have been authenticated as being the owner of the data that has been accessed/obtained without authorisation.

Intermediate dataset: this is a dataset that is in the path of the flow of data associated with the network security threat between the source dataset and the destination dataset. There may be multiple intermediate datasets in the path of the flow of data between the source dataset and the destination dataset. The first dataset may also be an intermediate dataset.

Forensic report: this comprises details of the determined network associated with the security threat. It includes details of each of the sources, and intermediate datasets that have been identified. The forensic report may be in the form of a list of datasets and their association with each other. Alternatively, or in addition, the forensic report may comprise a map of the network. This may comprise a layout of the network datasets and the network events between them showing the flow of the data associated with the network security threat between the source and first dataset.

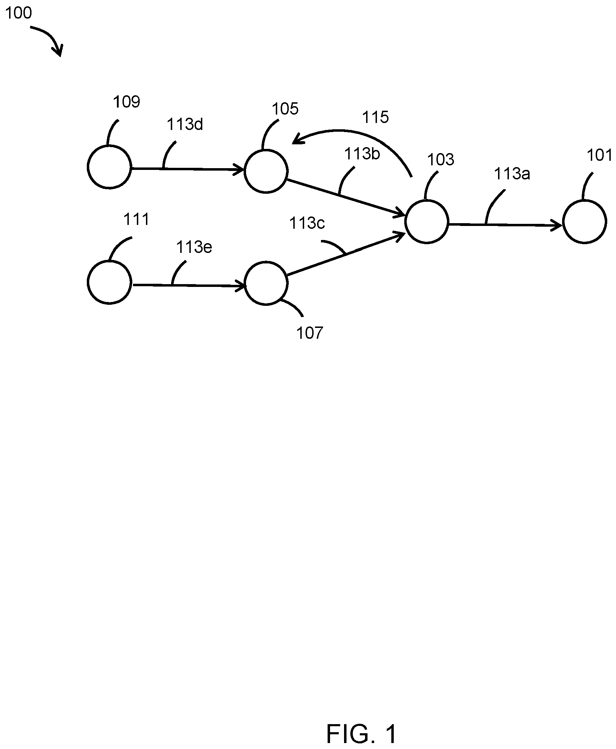

Figure 1 is a schematic diagram showing a portion of a network 100 in accordance with an embodiment of the invention. The network 100 includes a number of nodes, otherwise referred to as datasets 101, 103, 105, 107, 109, 111. Each dataset may comprise one or more items of data. In the network 100 shown in Figure 1 dataset 101, otherwise herein referred to as destination dataset 101. Dataset 103 is the first dataset.

Between each of the datasets are a series of network events 113. These network events 113 illustrate the path the data associated with the network security threat has travelled through the network 100 to arrive at the destination dataset 101.

Network event 113a is the flagged network event. Flagged network event 113a includes the data associated with a network security threat. The flagged network event 113a may have provided the data to the destination dataset 101, such that the destination dataset 101 comprises said data. Alternatively, the flagged network event 113a may have been prevented from actually transferring the data to the destination dataset 101.

Initially it may not be known where the data associated with the network security threat has come from. It may also not be known the complete path by which it has arrived at the first dataset 103 and then sent in the flagged network event 113a. All that might be known is that the flagged network event 113a comprises data associated with the network security threat, and in some instances the first dataset 103 that has sent the flagged network event 113a. The destination dataset 101 may also be known. In other words, the network map may originally only comprise destination dataset 101, the flagged network event 113a, and possibly dataset 103. Datasets 107, 109, and 111 may not be known. The network events from these datasets may also not be known. This can lead to problems as it might be desirable to return the data to the source datasets from which it originated. It may also be necessary to know where the data has originated to prevent further security threats from occurring. It is therefore desirable to determine these datasets and network events in order to determine where the data has originated. This can allow the network map as shown in Figure 1 to be determined which shows the path by which the data has taken from the source datasets 109 and 111 to the first dataset 103.

Flagged network event 113a that comprises data associated with the network security threat and details of destination dataset 101 may be obtained. For instance, they may be provided by a third party. The third party may be aware that dataset 101 is involved in receiving data associated with the network security threat through network event 113a.

By obtaining this information the path through which the data associated with the network security threat has taken can be determined. It may then be known that the flagged network event 113a has originated from first dataset 103. This may be also provided by the third party. Alternatively, this may be derivable through looking at the details of the network event 113a.

Once first dataset 103 is identified by the knowledge of network event 113a, it may be determined if this dataset 103 is the source of the data, i.e. where the data associated with the network security threat originated from, or if it is an intermediate dataset. In some embodiments the step of determining if the first dataset 103 is a source dataset may not be necessary as it may be already known that the first dataset 103 is not the source dataset.

The determination as to whether the dataset 103 is an intermediate or source dataset is carried out by comparing details of dataset 103 to predefined criteria.

The predefined criteria may be a particular profile of an intermediate dataset. Alternatively, or in addition, the predefined criteria may be a particular profile of a source dataset. This could be any of whether there are any further past network events associated with data arriving at the further dataset, the number of past network events that were associated with data transfer to or from the further dataset, the time difference between past network events that were associated with data transfer to or from the further dataset, how long the data has been present in the further dataset, a geographical location associated with the further dataset.

Whether there are any further past network events associated with data arriving at a dataset can indicate whether the dataset is a source dataset. A dataset having no incoming network events can be classified as a source dataset. A dataset having incoming network events can be classified as an intermediate dataset. This determination of whether there are any further past network events may be whether there are past network events that fall within a predetermined period. This is because a source dataset may still have received the data that originates from the source dataset from a further dataset at a point in the past. However, it is only network events related to the network security threat that are of interest. This predetermined time period will be sufficiently long enough to ensure that the previous transactions are not related to the network security threat.

The number of past network events that were associated with data transfer to or from the first dataset 103 may also by an indicator as to whether the dataset 103 is an intermediate or source dataset. If the number of past network events is high it may indicate that the dataset is an intermediate dataset.

The time difference between past network events that were associated with data transfer to or from the identified dataset 103 can be an indicator as to whether the dataset 103 is an intermediate or source dataset. For instance, if there is a short time difference between the data arriving at the first dataset 103 and being subsequently sent to the destination dataset 101 this may indicate that the dataset 103 is an intermediate dataset. It may also reinforce the fact that the first dataset 103 is related to the network security threat. This is because data associated with a network security threat may be transferred quickly through the network. Thus, fast transfers of data may indicate an intermediate node involved in transferring data associated with a network security threat. A quick transfer means that the security threat is passed to more nodes within a set period of time. It may also mean that the data is sent further from the source dataset and thus is harder to trace. Therefore, this predefined criteria recognises this and uses this to trace the data.

The geographical location may provide an indication as to whether the dataset is an intermediate dataset or a source dataset. The geographical location associated with the identified dataset may mean that the dataset is stored in a database that is associated with a particular region or country.

In a similar way, the length of time data associated with the network security threat has been present in the dataset 103 can also be used to determine if the first dataset 103 is an intermediate dataset or a source dataset. As the data associated with the network security threat originates from the source dataset, it will have been present at the source dataset for a longer period of time than at the intermediate dataset. A dataset where the data associated with the network security threat is only present for a short period of time may indicate that it is an intermediate dataset.

As can be seen in Figure 1 dataset 103 is an intermediate dataset. The data associated with the network security threat has not originated from this dataset.

To identify where the data associated with the network security threat has originated past network events between the intermediate dataset 103 and one or more further datasets are identified.

Network event 113b between first dataset 103 and dataset 105 is identified as contributing to the data associated with the network security threat. Network event 113c between first dataset 103 and dataset 107 is also identified as contributing to the data associated with the network security threat. In this way the data associated by the network security threat is a combination of data from datasets 105 and 107.

Determining whether the network events are associated with the transfer of the data associated with the network security threat may be carried out by only considering network events that fall within a certain time period (i.e. a certain dwell time). These network events may be attributed to the network security threat.

For instance, it may be known that the network security threat started at a certain time. Limiting the searching of past network events around this time can lead to the determination of only network events that are related to this network security threat. In this way, previous events that occurred before the network security threat occurred are not considered. Alternatively, the time period may be within a certain time since it was determined that there was a network security threat. As it might be expected that the network security threat will have occurred around the same time as the detection.

As illustrated in Figure 1, network event 113b is identified between first dataset 103 and dataset 105. Network event 113b is the sending of the data associated with the network security threat from dataset 105 to first dataset 103. In other words, network event 113b is the receiving of data associated with the network security event at the first dataset 103 from dataset 105. The tracing of the network event 113b from the dataset 105 to dataset 103 is shown by arrow 115. This is likewise the case for network event 113c but between dataset 107 and first dataset 103.

The data associated with the network security threat is traced through each of network events 113b and 113c to datasets 105 and 107 respectively. Dataset 105 is then identified to be an intermediate dataset, in the manner as outlined above for first dataset 103. Likewise dataset 107 is also identified to be an intermediate dataset using the steps outlined above for the first dataset.

The data associated with the network security threat is then traced as arriving at intermediate dataset 105 from dataset 109 through network event 113d. Dataset 109 is then compared to predefined criteria, as outlined above, to identify if it is an intermediate dataset or a source dataset. Dataset 109 is identified as being a source dataset. The data associated with the network security threat (or a portion thereof) has originated from the source dataset 109.

The data associated with the network security threat is also traced as arriving at intermediate dataset 107 from dataset 111 through network event 113e. Dataset 111 is then compared to predefined criteria, as outlined above, to identify if it is an intermediate dataset or a source dataset. Dataset 111 is identified as being a source dataset. The data associated with the network security threat (or a portion thereof) has originated from the source dataset 111.

The above enables a map of a portion of the network 100 to be determined showing the flow of data associated with the network security threat through the network. The flow of the data starts from the data sources 109 and 111 and arrives at the first dataset 103, via intermediate datasets 105, 107, 103, and then at the flagged network event.

Details of the portion of the network 100 can be output as a forensic report. As each source dataset 109 111 is identified they can be added to the forensic report.

In addition, as each intermediate dataset 103 105 107 is identified the intermediate datasets can be added to the forensic report. The forensic report may display the map of the portion of the network 100 as shown in Figure 1. Alternatively, or in addition, the forensic report may include a list of the datasets identified, along with details of the network events identified between the datasets.

In other scenarios, the forensic report may be created once the network 100 has been determined rather than when each node is identified.

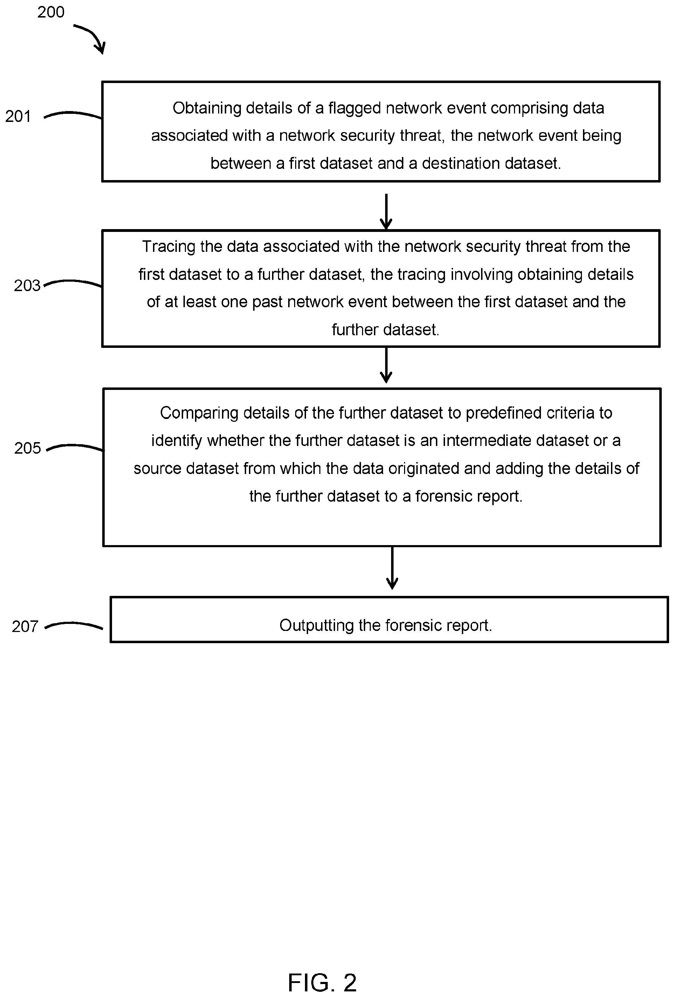

Figure 2 is a first flow chart setting out a method in accordance with an embodiment of the invention.

Step 201 involves obtaining details of a flagged network event comprising data associated with a network security threat, the network event being between a first dataset and a destination dataset.

In step 203 the data associated with the network security threat is traced from the first dataset to a further dataset, the tracing involving obtaining details of at least one past network event between the first dataset and the further dataset..

As step 205 details are compared of the further dataset to predefined criteria to identify whether the further dataset is an intermediate dataset or a source dataset from which the data originated and adding the details of the further dataset to a forensic report.. The predefined criteria may be criteria that demonstrate a distinction between characteristics of an intermediate dataset and a source dataset.

A forensic report is then output at step 207. The forensic report may include details of the one or more datasets identified within the network as being associated with the network security threat.

Optionally, the method may further involve if any of the one or more further datasets are identified to be an intermediate dataset repeating steps (203) to (205) starting from that intermediate dataset until a source dataset associated with the intermediate dataset is identified. Else if the further dataset is identified to be a source dataset adding details of the source dataset to a forensic report comprising details of the determined network associated with the security threat.

This may be expressed by the following steps:

   A. if any of the one or more further datasets are identified to be an intermediate dataset:

i) tracing the data associated with the network security threat from the identified intermediate dataset to one or more further datasets, the tracing involving identifying at least one past network event between the identified intermediate dataset and the one or more further datasets;

ii) comparing details of each of the one or more further datasets to predefined criteria to identify if each of the one or more further datasets are an intermediate dataset or a source dataset from which the data originated;

B. repeating step A) starting from each identified intermediate dataset identified in step ii) until a until a source dataset is identified in step ii);

C. adding details of the identified source datasets to a forensic report comprising details of the determined network associated with the security threat;

The network associated with the network security threat as determined using the method 200 may be the portion of the network 100 shown in Figure 1.

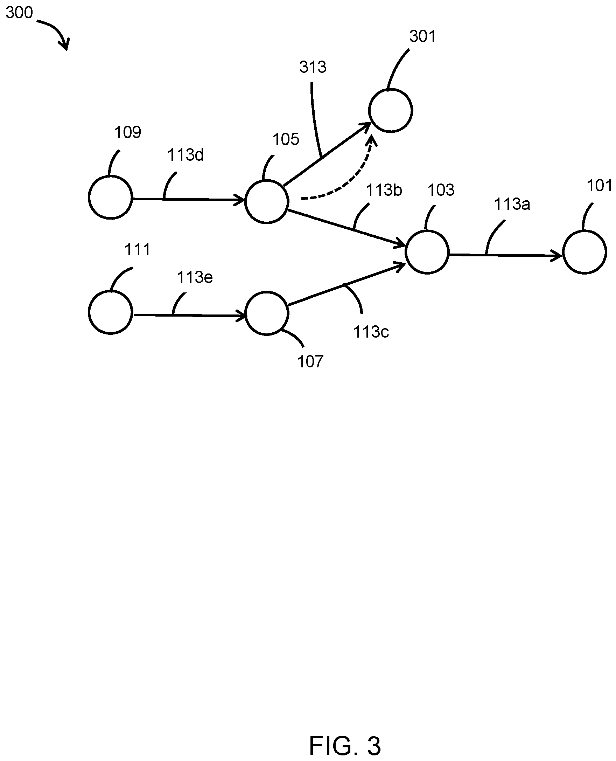

Figure 3 is a schematic diagram showing a network 300 in accordance with an embodiment of the invention. Network 300 includes the portion of the network 100 as identified using the method 200 shown in Figure 2 and in Figure 1. In Figure 3 like reference numerals are used for the same components as shown in Figure 1.

After the portion of the network 100 associated with the network security threat has been identified using the method 200 described above, it is desirable to determine if data associated with the network security threat originating from the source datasets 109 and 111 has been passed to one or more further datasets that have not been identified. In this way, it is possible to identify datasets that comprise data associated with the network security threat that otherwise might not be known about from the backward tracing as shown in Figures 1 and 2 described above.

Starting from the source dataset 109, network events can be determined originating from source dataset 109 that look suspicious. These network events might be a transfer of data associated with the network security threat that was not previously known about. This is because they are between the source dataset 109 and one or more datasets that have not previously been identified. The same approach as taken as described above for the backward trace may be used, i.e. network events falling within a predetermined time period may be identified to be suspicious. This time period can be the time period discussed above, such that they relate to the network security threat. The time of these network events may be the same as the time of the other network events associated with security threats from this or another dataset.

In the present case no network events are identified from the source dataset 109 that have not been determined already.

This step is then carried out at the next node in the network, intermediate dataset 105. Network event 313 is identified as originating from intermediate dataset 105 and being related to the unauthorised transfer of data associated with a network security threat. The network event 313 involves the transfer of data associated with the network security threat to dataset 301. Dataset 301 was not previously known about.

Dataset 301 may then be compared to predefined criteria, in the way as described above, to determine if it is an intermediate dataset. Alternatively, dataset 301 may be determined to be a dataset which currently holds the data associated with the network security threat. Thus, it is comparable to the destination dataset 101 (an end point for the data).

In this way, this forward tracing enables the detection of datasets that comprise data associated with the network security threat that were not known about from the method 200 used to create the map of the portion of the network 100 as shown in Figure 1. This can provide a more detailed and complete view of the network.

Even after a dataset of the type of dataset 301 has been determined, the above described forward tracing may be carried out at each dataset in the network previously identified along the path between destination dataset 101 and source dataset 109. As can be seen in Figure 3 in this particular network no further datasets are identified as comprising data associated with the network security threat. However, it can be understood that other datasets such as dataset 103, may in other network arrangements have additional network events that lead to further datasets such as 301.

The above steps of forward tracing are also repeated starting from the source dataset 111. As can be seen in Figure 3 no new datasets are identified in the forward tracing from source dataset 111. However, in other network arrangements one or more new datasets may be determined which comprise data associated with the network security threat.

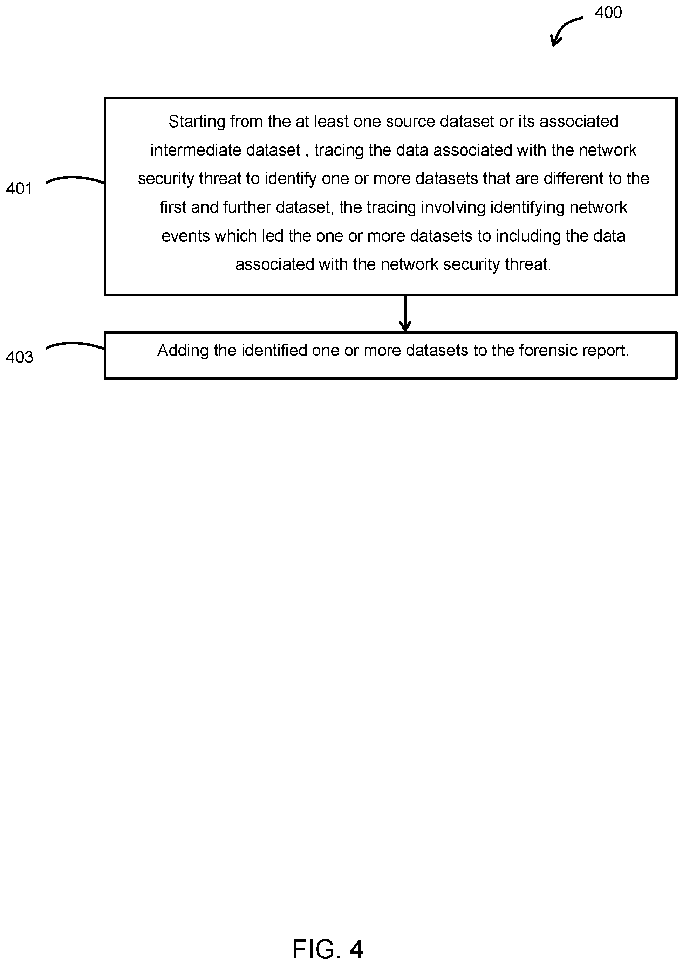

Figure 4 is a second flow chart setting out a method in accordance with an embodiment of the invention.

Step 401 involves starting from the at least one source dataset or its associated intermediate dataset, tracing the data associated with the network security threat to identify one or more datasets that are different to the first and further dataset, the tracing involving identifying network events which led the one or more datasets to including the data associated with the network security threat. The identified one or more datasets are also different to the destination dataset.

Step 403 involves adding the identified one or more datasets to the forensic report.

In some scenarios, after identifying source dataset 109 and intermediate dataset 105 through method 200, when identifying the portion of the network 100, it may be recognised that some data associated with the network security threat is not accounted for. By identifying dataset 301 though method 400 the location of this data can be determined.

Dataset 301 which comprises the data associated with a network security threat in the network is shown in Figure 3. However, in other network scenarios there may instead be one or more intermediate datasets between dataset 105 and dataset 301. In these scenarios, the flow of the data associated with the network security threat can be traced forwards through the one or more intermediate datasets in the way outlined above, to arrive at dataset 301 which comprises the unauthorised data.

In the above, backward tracing is described as following the flow of data from the destination dataset 101 to the one or more source datasets 109 and 111. This is right to left in Figures 1 and 3. Forward tracing is described as following the flow of data from the one or more source datasets 109 and 111 to the destination dataset 101. This is left to right in Figures 1 and 3. This may be based on time, i.e. backwards is backwards in time, and forwards is tracing forward in time from the point that the trace is started from.

Each of the datasets may comprise other data, which is not related to the network security threat. Each item of data in the datasets may have a value associated with it and a timestamp. This timestamp may indicate when the data was received at that dataset.

Each network event has associated with it a value and a timestamp. The timestamp indicates the time when the network event occurred. This might be any or both of when the network event was sent from the sending dataset, or when it was received at the receiving dataset. The value of the network event may be the data that is transmitted during the network event. This may be the data associated with the network security threat.

We will now outline for the mathematical algorithm for a method of forensically analysing and determining a network as shown above in Figures 1 to 4.

A network event $x_t$ at time $t$, is represented at a 4-tuple

$$x_t = (a_s, a_r, t, v) ,$$

where $a_s$ and $a_r$ are the sending and receiving datasets respectively and v is the value of the data being sent. We also define here an inbound network event identifier and an outbound network event identifier. These two utility functions are extensively used in the tracing part of the algorithm. Given a network event $x_{ti}$, the inbound network event identifier gives

$$f_{\text{in}} : x_{ti} \rightarrow X_{\text{in}},$$

Where

$$X_{\text{in}} = \{x_t \mid t_i - \Delta \leq t \leq t_i, x_t (a_r) = x_{ti} (a_s)\}. \ (1)$$

$\Delta$ is the dwell time that defines the time window of included network events and $x_{ti} (a_s)$ is the sending dataset in $x_{ti}$.

Similarly, the outbound network event identifier applied on a network event $x_{ti}$ can be written as

$$f_{\text{out}} : x_{ti} \rightarrow X_{\text{out}}$$

Where

$$X_{\text{out}} = \{x_t \mid t_i \geq t \geq t_i + \Delta, x_t (a_s) = x_{ti} (a_r)\}. \ (2)$$

$\Delta$ is as above and now $x_{ti} (a_r)$ is the target dataset in $x_{ti}$.

Starting from the flagged network event to the destination dataset (comprising the data associated with the network security threat) $x_f$ we identify the set of incoming network events to the sending dataset using the incoming network event identifier described above. This process is continually applied to the sending datasets of each included network event until sources dataset(s) are identified. Source datasets are datasets that have no inbound network events causing this part of the algorithm to come to a natural conclusion.

If we denote the outbound network event from these discovered source datasets as $X_v$ then we can write the backwards tracing part of the algorithm as

$$f : x_f \rightarrow X_v,$$

relating the flagged network event $x_f$ to a set of potential network events related to a network security threat $X_v$, through a network of intermediate datasets.

Once the backward trace is complete the algorithm will take each network event in $X_v$ and trace forward from each receiving dataset using the outbound network event identifier described above. The forward tracing will rediscover all the network events from the backwards phase, but its key purpose is to identify new network events $X_e$ and new associated endpoint datasets that would not have been found by the backwards trace. This portion of the tracing algorithm stops when new endpoints with no further outbound network events are reached or the destination dataset is reached. This defines the stopping criteria for the forwards trace.

If we denote all the network events found between $X_v$ and $x_f$ as $X_m$ indicating network events between all the suspect intermediate datasets and $X_e \subset X_m$ then the set of network events that make up the network $X_r$ can be written as

$$X_r = \{x_f\} \cup X_m \cup X_v$$

where network events into and out of datasets respect the time properties laid out in equations 1 and 2.

Once the network 300 has been determined it may be desirable to transfer the data associated with the network security threat from flagged network event, where it is not meant to be, back to the source datasets from where it was taken. The methods 200 and 400 described above, tracing the flow of the data both backwards and forwards, provides a detailed view of the network of datasets involved in the unauthorised transfer of the data associated with the network security threat.

If there is a single data source it can be trivial to return the data associated with the network security threat. All of the data that has been illegitimately obtained can be returned to that single data source (or at least all of the data that is present in the flagged network event).

However, if there is more than one data source it may be necessary to determine what proportion of the data associated with the network security threat is to be returned to each of the source datasets. This is particularly important if a portion of the data associated with the network security threat is no longer present at the first dataset/flagged network event, or has gone missing between the source dataset and the first dataset/flagged network event. In this situation, it might not be possible to return all of the data associated with the network security threat that was initially obtained from the source datasets.

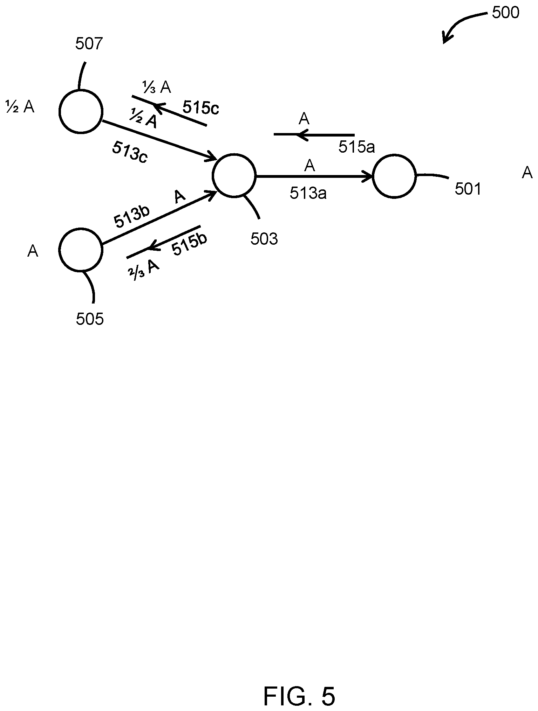

Figure 5 shows a schematic diagram of returning data to nodes of a network in accordance with an embodiment of the invention. Network 500 has been determined using the methods 200 and 400 as described above in relation to Figures 1 to 4. In network 500 no further new datasets have been identified in the forwards trace of method 400, although it could be understood that the following steps could be equally applied to a network of this type. Network 500 includes a destination dataset 501, intermediate first dataset 503 and two source datasets 505 and 507.

Data A is obtained from source dataset 505 through a network security threat. Data A is sent via network event 513b to intermediate dataset 503.

Data ½A is obtained from source dataset 507 through network security threat. Data ½A sent via network event 513c to intermediate first dataset 503.

Intermediate dataset 503 then forwards the data A to destination dataset 501 through flagged network event 513a. The flagged network event 513a is made up of a proportion of the data received from datasets 505 and 507.

As outlined above destination dataset may comprise data A. However, alternatively, data A may not have reached destination dataset 501, as flagged network event 513a has been flagged, dataset 501 is given the value of the data in the flagged network event 513a for the purpose of returning the data.

Destination dataset 501 is considered to receive data A associated with the network security threat from flagged dataset 513a. This may be because first dataset 503, despite receiving A +½A only sends on A in flagged network event 113a.. The other data ½A has been transferred from the first dataset 503 such that its location cannot be determined. Thus, there is only the data A that can be returned to the data sources 505 and 507.

The steps of returning data associated with the network security threat will now be described. Destination dataset 501 currently comprises said data. As there is only one network event 513a between dataset 501 and intermediate dataset 503 in the network 500 shown in Figure 5, all of the data A can be returned to intermediate dataset 503.

Once the data has been returned to intermediate first dataset 503 it is then determined what network events originally contributed to the data arriving at the first dataset 503 after the network security threat. These will have been determined when determining the network according to method 200. At intermediate dataset 503 there are two network events 513b and 513c that originally contributed to the data associated with the network security threat being present at the intermediate dataset 503. It is then determined what contribution each of the network events 513b and 513c made to the data associated with the network security event that was originally received at the intermediate dataset 503.

The data associated with the network security threat is then returned to data sources 505 and 507 based on the percentage contribution originally taken from each of the data sources 505 and 507. As can be seen in Figure 5, originally data source 505 sent data A to dataset 503, and data source 507 sent data ½A. As only data A has been returned to dataset 503, only data $\frac{2}{3}A$ is returned to dataset 505 through 515b, and only data ⅓A is returned to dataset 507 through 515c.

At each and every dataset in the path between the destination dataset and the source datasets if it is determined that more than one network event led to the data obtained without authorisation being present at that dataset the contribution of each of these network events is determined. The data obtained without authorisation is then returned based on the contribution made by each of the network events.

In some networks there may be further splitting of the data that is being returned where a dataset is supplied with data associated with a network security threat from multiple different datasets.

Of course, no more data than originally was sent down a path can be sent back along it when returning the data to the datasets.

We will now outline the mathematical algorithm for a method of returning the data associated with the network security threat as described above in relation to Figure 5.

The algorithm uses a directed multi-graph $G(V, E)$, where the set of nodes $V$ denotes the datasets and the set of edges E describes the relationships between datasets. On each edge e of the graph properties of the network event on that relationship are stored, such as the time of the network event and its value.

A graph G is initialised with all nodes having zero value of data associated with them other than the dataset identified as comprising the data associated with the network security threat $v_f$ (i.e. dataset 101), which is given a data value of the value of the network event that led to the data associated with the network security threat arriving at destination dataset $v_f$ (i.e. dataset 101). Note though that no assumption is made about the availability of this data, the algorithm returns only a list of the source datasets $\{v_s; \forall_s \in S\}$ and what data is to be returned to them, given the set of network events in the graph.

From this network $G(V, E)$, the first part of the algorithm is to produce the simplified network $G'(V', E')$. The graph is initially reversed so that network events flow from the dataset $v_f$ to the source dataset $v_s$. From this network nodes and edges are removed that are not relevant to the repatriation task. To do this, paths P are identified:

$$P = \{p_{vf \to vs} \, ; \, \forall_s \in S\},$$

between the dataset $v_f$ and the source datasets $v_s$. This leaves a network that only contains nodes V' and edges E' that directly link the data at the destination dataset $v_f$ and sources datasets.

Given the simplified network $G'(V', E')$, it is then traversed using a Breadth-First search starting from the destination dataset $v_f$. At each node $v_i$, $\forall v \in V'$, if there are multiple claims to the data in that dataset then the principle as outlined in relation to Figure 5 is applied. For example, at $v_f$ if there are three outbound edges $e_i \in E'$ with data values $t_i$, then the amount of data transferred back along $e_i$ is given by:

$$Bal(v_f) * \left[ \frac{t_i}{\sum_{j=1}^{3} t_j} \right],$$

where Bal($v_f$) refers to the available data at $v_f$. The term in brackets denotes the contribution of the network event value of edge $e_i$ relative to the sum of network event values out of $v_f$.

The algorithm checks to make sure that more data are not sent back along an edge e than was originally sent down it. The search along the simplified network continues until all nodes and edges have been explored, and naturally ends when the source datasets are reached. The result of the algorithm is a list of source datasets and the amount of data to be returned relative to the data originally obtained due to the network security breach.

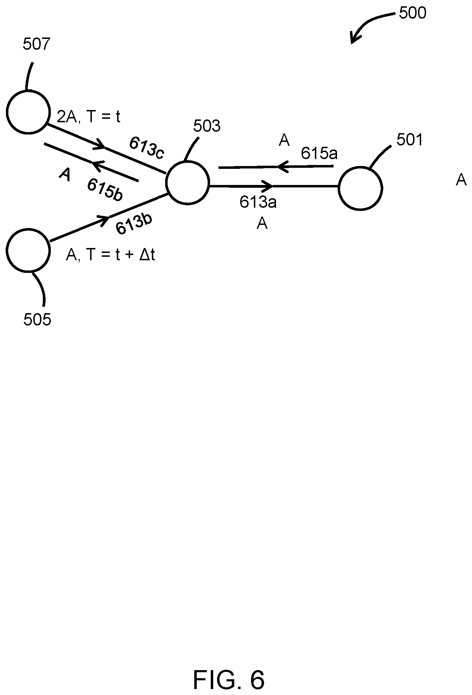

Figure 6 is a schematic diagram of returning data to nodes of a network in accordance with a further embodiment of the invention. The network 500 shown in Figure 6 is the same network as shown in Figure 5. The network has been determined using methods 200 and 400 as outlined above.

Figure 6 illustrates an alternative approach to that as outlined above in relation to Figure 5 of returning data associated with a network security threat to the source dataset.

Data associated with the network security threat originates from both source dataset 505 and source dataset 507. Data 2A is obtained at intermediate first dataset 503 from source dataset 507 through network event 613c at time T = t. Data A is obtained at intermediate first dataset 503 from source dataset 509 through network event 613b at time T = t + Δt.

A portion of the data associated with the network security threat received at intermediate network first dataset 503 is then passed to destination network dataset 501 through flagged network event 613a. Network event 613a is shown as a single network event. However, in other scenarios it may be made up of more than one network event. Thus, destination dataset 501 is considered to have obtained the data A associated with the flagged network security threat 613a (despite the fact that it might not actually have reached the dataset 501 if it has been flagged before reaching the destination dataset as outlined above).

The other data 2A, that was received at dataset 503, is not transferred from first dataset 503 via flagged network event 613a, as it may be lost or transferred elsewhere, as explained above for Figure 5.

There is only the data A to return to the datasets 505 and 507.

The process of returning the data associated with the network security threat as shown in Figure 6 from a particular dataset is based upon the time at which the data arrived at the dataset. The flow of the data is traced backwards from the destination dataset 501 through each node to the source datasets 505 and 507. At each dataset if there is more than one network event that led to the data associated with the network security threat arriving at that dataset then the priority is given of returning data associated with the network security threat associated with the earliest network event. This principle can be through of as first in first out.

As can be seen in Figure 6, there is only one network event 613a that led to the data arriving at the destination dataset. All of the data A is returned through 615a to the intermediate dataset 503.

At dataset 503 there are now two network events that led to the intermediate dataset receiving the data. Of the two network events, network event 613c occurred earlier (at time T = t) than network event 613b (at time T = t + Δt). Therefore, returning data associated with network event 613c takes preference over network event 613b. As network event 613c originally sent data 2A, all of the data A that is at intermediate dataset 503 is returned via 615b to source dataset 507.

In the above described case after returning data A via 615b to source dataset 507 there is no further data at intermediate dataset 503. Thus, no data is returned to dataset 505.

As will be understood, in other scenarios where data to be returned is present at intermediate dataset 503 after returning data through 615b, data will be returned to data source 505 as this is the next oldest network event.

We will now outline the mathematical algorithm for a method of returning the data associated with the network security threat as described above in relation to Figure 6.

The algorithm uses a directed multi-graph (*V, E*), where the set of nodes *V* denotes the datasets and the set of edges *E* describes the relationships between datasets. On each edge e of the graph properties of the network event on that relationship are stored, such as the time of the network event and its value.

The initial state is a graph *G* initialised with all nodes having zero value of data associated with them other than the destination dataset $v_f$, which is given a value equal to the value of the network event leading to the destination dataset. Note though that no assumption is made about the actual availability of this value (i.e. what the value of the dataset at the present time), the algorithm returns only a list of the source datasets $\{v_s; \forall_s \in S\}$ and what data is to be returned to them, given the set of network events in the graph.

All paths *P* between the set of source datasets $\{v_s; \forall_s \in S\}$ and the destination dataset $v_f$ are identified. A path constitutes a set of edges that join the two datasets in the graph. We define the path $p_{vs \to vf,t}$; as being the path between the destination dataset $v_f$ and the source dataset $v_s$ and the value of t describes the path's order in time. *P* is then written as

$$P = \{p_{vs \to vf,t}; \forall_s \in S \text{ and } t = 0, \dots, n\},$$

where *n* is the number of network security threats in the network. The paths are ordered in time according to the outbound network event from the source $v_s$ such that $p_{vs \to v,t=0}$ occurred earlier than $p_{vs \to vf, t=1}$. The paths are identified using a modified depth-first search.

If we denote $p_0$ as the earliest path between $v_f$ and a source $v_s$, then data are moved back starting from $v_f$ at each dataset *v* it is checked that the value being transferred back does not exceed the maximum of the original network event. Once $p_0$ has been traversed, the algorithm will check if there are any data from the destination dataset still available and if so continue with $p_1$ and so on. The algorithm's natural stopping point is when all path *P* have been traversed or the value of $v_f$ = 0.

The methods outlined in Figure 5 and 6 demonstrate how the data may be sent back to source datasets. However, these steps of sending data may not actually be carried out. Instead, the path that the data takes and the value of data sent when returning the data to the data source may instead be identified. This information may then be put into a forensic report. This may be the same forensic report as identified in methods 200 and 400. The forensic report therefore details the network 100 and/or 300 and values of data to be returned to the sources and the path through which the data takes.

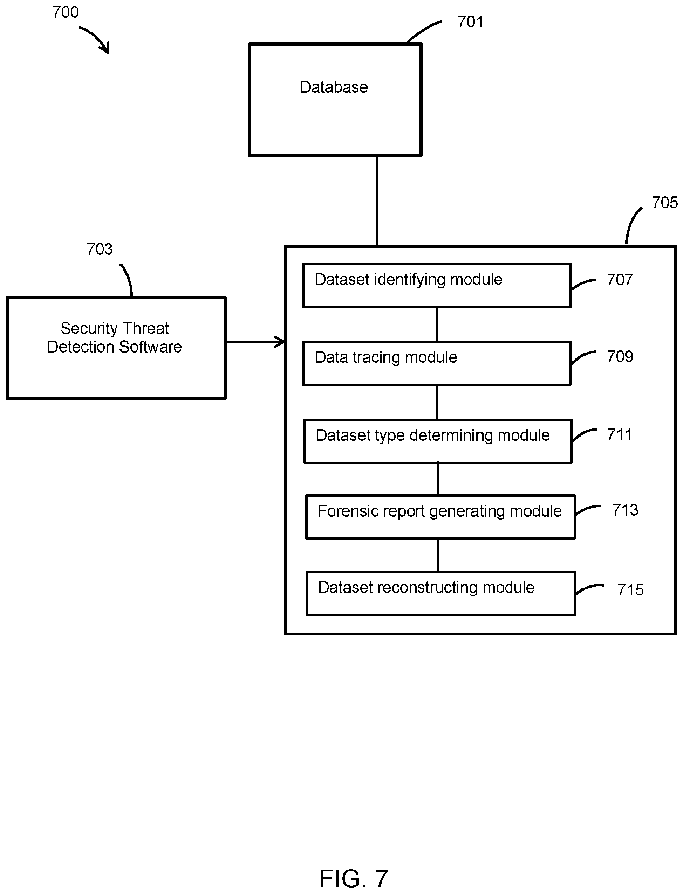

Figure 7 is a schematic diagram of a system 700 capable of implementing the invention and in accordance with an embodiment of the invention. Device 705 includes a number of modules. These include dataset identifying module 707, data tracing module 709, dataset type determining module 711, forensic report generating module 713. Each of the modules may communicate with one another.

Security threat detection software 703 includes the code configured to perform the methods as described above in relation to Figures 1 to 6. Security threat detection software 703 may be executed on device 705. Each of the modules 707 to 713 may be responsible for executing a specific portion of the code.

Dataset identifying module 707 is responsible for obtaining data associated with and/or identifying the network events that comprise data associated with a network security threat.

Data tracing module 709 is responsible for tracing the data associated with the network security threat between the datasets to determine the flow of the data associated with the network security threat.

Dataset type determining module 711 is responsible for comparing details of each of the identified datasets to predefined criteria to identify if the datasets are an intermediate dataset or a source dataset.

Forensic report generating module 713 is responsible for outputting a forensic report comprising details of the determined network associated with the security threat.

System 700 also includes database 701. The data associated with the datasets is stored in database 701. In some arrangements the data of the datasets may be stored in more than one database 701. For instance, each dataset may have its own database 701. It may also be understood that the data from each dataset may be stored across numerous databases, such that a datasets data is not stored on a single database. The data from the datasets may be stored in the database by any means that is known. For each entry stored in the dataset the data may comprise data having a certain value and a time stamp associated with the item of data.

As outlined earlier, in relation to Figure 1, datasets 103, 107, 109, 111 and the network events between them may not be known to device 705. The execution of software 703 enables device 705 to determine this network.

It will be appreciated that any of the methods described herein, and any particular step of said methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of a method may be implemented by different processors that are all collectively acting in accordance with computer-readable instructions stored on one or more storage media. The processor or processors may be component(s) of system 700, for example a processor of device 705.

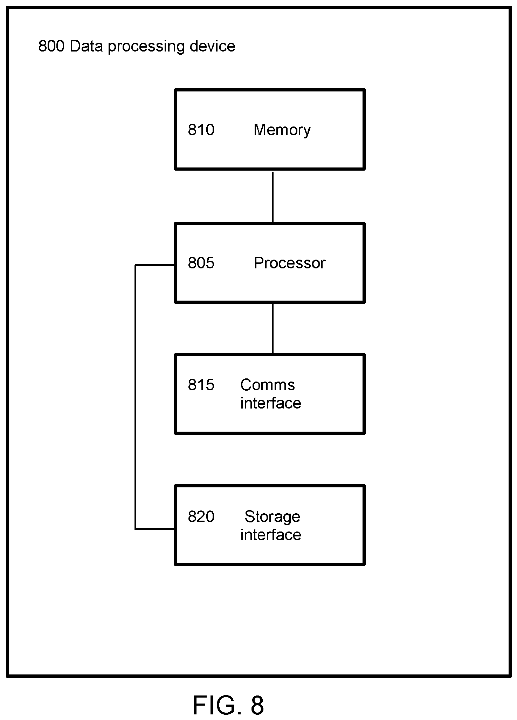

Equally, any steps of any of the methods described herein may be performed by data processing devices as described in respect of system 700 of Figure 7. By way of example, Figure 8 shows in schematic form a data processing device 800 that is suitable for performing the functions of each of the modules 707 to 713 of device 705. The data processing device 800 may automatically perform any of the methods described herein, and automatically output a forensic report. In addition, upon the determination of a forensic report for returning the data it may involve the data processing device 800 automatically returning said data to the data sources according to the forensic report.

Data processing device 800 includes a processor 805 for executing instructions. Instructions may be stored in a memory 810, for example. Processor 805 may include one or more processing units (e.g., in a multi-core configuration) for executing instructions. The instructions may be executed within a variety of different operating systems on the data processing device 800, such as UNIX, LINUX, Microsoft Windows®, etc. More specifically, the instructions may cause various data manipulations on data stored in memory 810 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 805 is operatively coupled to a communication interface 815 such that data processing device 800 is capable of communicating with a remote device, such as another data processing device of system 700. For example, communication interface 815 may receive communications from another member of system 700.

Processor 805 may also be operatively coupled to a storage device such as database 701, depending on the function of data processing device 800 within the context of system 100. The storage device is any computer-operated hardware suitable for storing and/or retrieving data, where in the case of a secure storage medium the data is stored and retrieved securely.

Database 701 can be external to data processing device 800 and located remotely. Alternatively, it can be integrated in data processing device 800. For example, data processing device 800 may include one or more hard disk drives as a storage device. Alternatively, where the storage device is external to data processing device 800, it can comprise multiple storage units such as hard disks or solid state disks in a redundant array of inexpensive disks (RAID) configuration. The storage device may include a storage area network (SAN) and/or a network attached storage (NAS) system.

Processor 805 can be operatively coupled to the storage device via a storage interface 820. Storage interface 820 is any component capable of providing processor 805 with access to the storage device. Storage interface 820 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 805 with access to the storage device.

Memory 810 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

As outlined above, the present method relates to a network security threat that has occurred. One example of a network security threat may be a virus on a computer system. In this scenario each dataset is a computer system. The network is the connection between these computer systems, be it through the internet or through a wired local connection. The destination dataset is a computer system that has been identified to be intended to be infected with said virus, this may be from receiving a malicious transfer of data that has been flagged. It is then determined how the virus arrived at the infected computer system by tracing the path the virus has taken backwards from the flagged transfer of data that is intended to infect the computer system. The network events are the further acts of sending the virus between the computer systems. This might be through an email, through removable storage, the internet, or any other means known to transmit viruses. An intermediate dataset is a computer system that is responsible for passing on the virus that it has received. A source dataset is the computer system on which the virus was originally created, and/or the first computer system to become infected. Advantageously, by determining where the virus originated from the vulnerabilities in the network can be determined. It also allows determination of computer systems that may belong to or be used by criminals.

In addition, the forward tracing of the method of 400 allows determination of computer systems infected by the virus that might not be known about. For instance, these computer systems might not have the appropriate anti-virus software installed to recognise that they are infected. This may provide a method of identifying that these computer systems are infected.

The network is a financial network and the network security threat an unauthorised modification of routing information within the financial network. For instance, it may be a fraud in a financial system. The data associated with a network security threat may be a fraudulent transaction, where money has been taken from an account without authorisation. The datasets may be bank accounts. The destination dataset is a bank account that has been frozen which has been determined to have been sent funds relating to the fraudulent transaction or to be receiving them through the network event 113a. The flagged network event may be a frozen transaction containing said funds. The network events between the datasets are the fraudulent transfer of data between the bank accounts. The intermediate datasets may be thought as being mule accounts. Whereas the source datasets are the accounts from which the data was fraudulently taken.

In this embodiment, the returning of the data to the source accounts is the repatriation of funds back to the account from which the funds were fraudulently taken. The method of Figure 5 may be a version of Pari-Passu principle. The method of Figure 6 may be a version of Clayton's Rule principle. It is important that in this financial system that funds (i.e. data) should not be transferred more than once from the dataset it is within.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

As described in relation to Figure 1 details of the network event 113a may be provided by a third party to the device 705. The identification of the datasets may then be determined through identifying network events starting from first dataset 103. However, in other arrangements the network event 113a may not be provided by a third party. The device 705 may identify the network event 113a and/or dataset 103. In other arrangements, the details of dataset 103 may be provided by the third party, rather than the network event 113a.

It may also be understood that it may not be necessary to determine if one or more of the datasets are an intermediate or source dataset. For instance, it may not be necessary to determine if dataset 103, or 105 is an intermediate or source dataset. It may be implicit that dataset 103, or 105 is an intermediate dataset. Alternatively, a third party may indicate that dataset 103, or 105 is an intermediate dataset if the third party provides details of the dataset 103, or 105.

Of course the portions of the network 100 shown in Figure 1 and the network 300 shown in Figure 3 are just one example of a network. The network may take on any form or combination of datasets, with varying network events between them. For instance, the network 100 shown in Figure 1 only shows a single network event between each of the datasets. However, multiple network events may occur between each of the datasets. The networks shown in Figures 1 and 3 are just simple examples of networks. Typical networks may include from three nodes upwards to many hundreds of nodes. Each node having many network events between them.

As described above, the returning of data associated with the network security threat is carried out by returning the data through each identified intermediate dataset in the network along the flow path that the data has travelled. However, in other arrangements the amount of data to be returned to each source dataset may be determined as described above, with the data then sent directly from the destination dataset(s) to the source dataset(s). This is instead of the data passing back through every intermediate node. This may be advantageous, if it is determined that the intermediate nodes are unsecure, which might prevent or hinder the return of the data to the source datasets.

In addition, multiple different data may be identified at the destination dataset to relate to the network security threat. This multiple data may be transferred together back to the source dataset or separately.

In the methods discussed above the data associated with the network security threat has been described as being divisible such that a fraction of the data (or a multiple) may be transferred back to the source. However, the data may not be able to be combined and may instead be transferred separately to the source datasets.

Although it has been described that the past network events that fall within a predefined time period are those which are determined to be related to the network security threat when carrying out the backward and forward tracing, other criteria may be used. In addition, or alternatively, the network events may be evaluated in order to determine if the data sent in the network event is the same data as the data associated with the network security threat. For instance, whether the data has the same value or content as the data associated with the network security threat. In other arrangements, the nature of the dataset to which the network event is sending data to may be further criteria to determine whether the network event is related to the network security threat. For instance, the geographical location associated with the dataset (as discussed previously) may be used as an indication as to whether the network event is associated with the network security threat.

It may be known that datasets associated with certain geographical locations are more likely to be associated with one or more network security threats. In other scenarios, the geographic location associated with the identified dataset may be compared to the geographical location of the first dataset/destination dataset or its neighbouring nodes in the network to determine whether the dataset is potentially involved in the network security threat. A geographical location that is different to the neighbouring node in the network may be a flag that the identified dataset is involved in the network security threat. This might particularly be the case if the first/destination dataset has never previously had dealings with a dataset associated with such a geographical location.

The number of past network events that were associated with data transfer to or from an identified dataset 103 may also by an indicator as to whether the dataset 103 is involved in providing the data associated with the network security threat. A large number of network events between the identified dataset 103 and the destination dataset 101 may indicate that the identified dataset 103 is involved in illicit activity and therefore relates to the network security threat.

Although Figure 7 shows a device for performing the methods 200 and 400, any type of device could perform said methods. Alternatively, the method may be performed over multiple devices. For instance, any of modules 707 to 713 could be located over multiple devices.

**Claims**

1. A computer-implemented method for forensically analysing and determining a financial network associated with a network security threat, wherein the network security threat is the unauthorised modification of routing information within the financial network, the method comprising:

   a) obtaining (201) details of a flagged network event comprising data associated with the network security threat, the network event being between a first dataset and a destination dataset;
   b) tracing (203) the data associated with the network security threat from the first dataset to a further dataset, the tracing involving obtaining details of at least one past network event between the first dataset and the further dataset;
   c) comparing (205) details of the further dataset to predefined criteria to identify whether the further dataset is an intermediate dataset or a source dataset from which the data originated and adding the details of the further dataset to a forensic report;
   d) outputting (207) the forensic report.

2. The computer-implemented method of claim 1, further comprising
   if the further dataset is identified to be an intermediate dataset repeating steps b) to c) starting from that intermediate dataset until a source dataset associated with the intermediate dataset is identified, else if the further dataset is identified to be a source dataset adding details of the source dataset to the forensic report comprising details of the determined network associated with the security threat;

3. The computer-implemented method of claim 1 or 2, further comprising once at least one source dataset has been identified:

   starting from the at least one source dataset or its associated intermediate dataset, tracing (401) the data associated with the network security threat to identify one or more datasets that are different to the first and further dataset, the tracing involving identifying network events which led the one or more datasets to including the data associated with the network security threat;
   adding (403) the identified one or more datasets to the forensic report.

4. The computer-implemented method of any preceding claim, wherein the predefined criteria are one or more of: whether there are any further past network events associated with data arriving at the further dataset, the number of past network events that were associated with data transfer to or from the further dataset, the time difference between past network events that were associated with data transfer to or from the further dataset, how long the data has been present in the further dataset, a geographical location associated with the further dataset.

5. The computer-implemented method of any preceding claim, wherein the details of the determined network associated with the security threat comprises a map of the network, and/or a list of past network events between the identified datasets.

6. The computer-implemented method of any preceding claim, wherein the step of obtaining (203) details of past network events between the first dataset and the further dataset involves identifying past network events which fall within a predefined time period.

7. The computer-implemented method of any proceeding claim, further comprising determining a procedure for returning the data associated with the network security threat at the flagged network event to each of the identified source datasets.

8. The computer-implemented method of claim 7, wherein when there is more than one source dataset in the network, the step of determining a procedure for returning comprises:

    i. determining which network event between the first dataset and the further datasets occurred first;
    ii. adding details of this network event to the forensic report for future use of returning the data associated with the network security threat associated with this network event to the further dataset; and
    iii. if it is determined that some data associated with the network security threat will remain in the first dataset after the future returning repeating steps (i) to (iii).

9. The computer-implemented method of claim 8, further comprising when the further dataset that the data is to be returned to is an intermediate dataset:

    iv. determining at this intermediate dataset which network event between this intermediate dataset and the further datasets occurred first;
    v. adding details of this network event to the forensic report for future use of returning the data associated with the network security threat associated with this network event to the further dataset associated with this network event;
    vi. if it is determined that some data associated with the network security threat will remain in the intermediate dataset after the future returning repeating steps (iv) to (vi).

10. The computer-implemented method of claim 7, wherein when there is more than one source dataset in the network, the step of determining a procedure for returning comprises:

    identifying the contribution each network event between the first dataset and the further datasets made to the data associated with the network security threat at the flagged network event; and
    adding details of these network event and their contribution to the forensic report for future use of returning the data associated with the network security threat associated with each network event to the further datasets based on their identified contribution.

11. The computer-implemented method of claim 10, further comprising for each of the datasets that the data is to be returned to that are an intermediate dataset:

    identifying a contribution each network event between the intermediate dataset and further datasets made to the data associated with the network security threat at the intermediate dataset;
    adding details of these network event and their contribution to the forensic report for future use of returning the data associated with the network security threat associated with each network event to the further datasets based on their identified contribution.

12. The computer implemented method of any of claims 7 to 11, returning the data based on the determined procedure for returning.

13. A system (700) configured to forensically analyse and determining a financial network associated with a network security threat, wherein the network security threat is the unauthorised modification of routing information within he financial network, the system comprising:

    an identifying module (707) configured to obtain detail of an flagged network event comprising data associated with the network security threat, the network event being between a first dataset and a destination dataset;
    a tracing module (709) configured to trace the data associated with the network security threat from the first dataset to a further dataset, the tracing involving obtaining details of past network events between the first dataset and the further dataset;

a dataset type determining module (711) configured to compare details of each of the further dataset to predefined criteria to identify if the further dataset is an intermediate dataset or a source dataset from which the data originated;

a forensic report generating module (713) configured to output a forensic report comprising details of the determined network associated with the security threat when the further dataset is identified to be a source dataset.

14. The system of claim 13, further configured to perform the method of any of claims 1 to 12.

15. A non-transitory computer-readable storage medium storing instructions thereon which, when executed by a processor, cause the processor to perform the method of any one of claims 1 to 12.

## Patentansprüche

1. Computerimplementiertes Verfahren zur forensischen Analyse und Bestimmung eines mit einer Netzwerksicherheitsbedrohung assoziierten finanziellen Netzwerks, wobei die Netzwerksicherheitsbedrohung die nicht autorisierte Modifizierung von Routing-Informationen innerhalb des finanziellen Netzwerks ist, wobei das Verfahren Folgendes umfasst:

a) Erhalten (201) von Einzelheiten eines markierten Netzwerkereignisses, das Daten umfasst, die mit der Netzwerksicherheitsbedrohung assoziiert sind, wobei das Netzwerkereignis zwischen einem ersten Datensatz und einem Zieldatensatz liegt;

b) Verfolgen (203) der mit der Netzwerksicherheitsbedrohung assoziierten Daten von dem ersten Datensatz bis zu einem weiteren Datensatz, wobei das Verfolgen das Erhalten von Einzelheiten von mindestens einem vergangenen Netzwerkereignis zwischen dem ersten Datensatz und dem weiteren Datensatz beinhaltet;

c) Vergleichen (205) von Einzelheiten des weiteren Datensatzes mit vorab definierten Kriterien, um zu identifizieren, ob der weitere Datensatz ein Zwischendatensatz oder ein Quelldatensatz ist, aus dem die Daten stammen, und Hinzufügen der Einzelheiten des weiteren Datensatzes zu einem forensischen Bericht;

d) Ausgeben (207) des forensischen Berichts.

2. Computerimplementiertes Verfahren nach Anspruch 1, weiter umfassend,

falls der weitere Datensatz als Zwischendatensatz identifiziert wird, Wiederholen der Schritte b) und c) ausgehend von diesem Zwischendatensatz, bis ein Quelldatensatz, der mit dem Zwischendatensatz assoziiert ist, identifiziert wird, andernfalls, falls der weitere Datensatz als Quelldatensatz identifiziert wird, Hinzufügen von Einzelheiten des Quelldatensatzes zu dem forensischen Bericht, umfassend Einzelheiten des bestimmten Netzwerks, das mit der Sicherheitsbedrohung assoziiert ist.

3. Computerimplementiertes Verfahren nach Anspruch 1 oder 2, weiter umfassend, sobald mindestens ein Quelldatensatz identifiziert wurde:

ausgehend von dem mindestens einen Quelldatensatz oder seinem assoziierten Zwischendatensatz, Verfolgen (401) der mit Netzwerksicherheitsbedrohung assoziierten Daten, um einen oder mehrere Datensätze zu identifizieren, die sich von dem ersten und weiteren Datensatz unterscheiden, wobei das Verfolgen ein Identifizieren von Netzwerkereignissen beinhaltet, die dazu geführt haben, dass der eine oder die mehreren Datensätze die Daten einschließen, die mit der Netzwerksicherheitsbedrohung assoziiert sind;

Hinzufügen (403) des bzw. der identifizierten einen oder mehreren Datensätze zu dem forensischen Bericht.

4. Computerimplementiertes Verfahren nach einem vorstehenden Anspruch, wobei die vorab definierten Kriterien eines oder mehrere sind aus: ob weitere vergangene Netzwerkereignisse bestehen, die mit Daten assoziiert sind, die am weiteren Datensatz ankommen,

der Anzahl von vergangenen Netzwerkereignissen, die mit Datenübertragung zu oder von dem weiteren Datensatz assoziiert waren, dem Zeitunterschied zwischen vergangenen Netzwerkereignissen, die mit Datenübertragung zu oder von dem weiteren Datensatz assoziiert waren, wie lange die Daten im weiteren Datensatz vorhanden waren, einem geografischen Standort, der mit dem weiteren Datensatz assoziiert ist.

5. Computerimplementiertes Verfahren nach einem vorstehenden Anspruch, wobei die Einzelheiten des bestimmten Netzwerks, das mit der Sicherheitsbedrohung assoziiert ist, eine Karte des Netzwerks und/oder eine Liste vergangener Netzwerkereignisse zwischen den identifizierten Datensätzen umfassen.

6. Computerimplementiertes Verfahren nach einem vorstehenden Anspruch, wobei der Schritt des Erhaltens (203) von Einzelheiten von vergangenen Netzwerkereignissen zwischen dem ersten Datensatz und dem weiteren Datensatz Identifizieren von vergangenen Netzwerkereignissen beinhaltet, die innerhalb eines vorab definierten Zeitraums fallen.

7. Computerimplementiertes Verfahren nach einem vorstehenden Anspruch, weiter umfassend Bestimmen einer Prozedur zum Rückführen der mit der Netzwerksicherheitsbedrohung assoziierten Daten am markierten Netzwerkereignis an jeden der identifizierten Quelldatensätze.

8. Computerimplementiertes Verfahren nach Anspruch 7, wobei, wenn es mehr als einen Quelldatensatz im Netzwerk gibt, der Schritt des Bestimmens einer Prozedur zum Rückführen Folgendes umfasst:

    i) Bestimmen, welches Netzwerkereignis zwischen dem ersten Datensatz und dem weiteren Datensatz zuerst aufgetreten ist;
    ii) Hinzufügen von Einzelheiten dieses Netzwerkereignisses zu dem forensischen Bericht für die zukünftige Verwendung des Rückführens der mit der Netzwerksicherheitsbedrohung assoziierten Daten, die mit diesem Netzwerkereignis assoziiert sind, an den weiteren Datensatz; und
    iii) wenn bestimmt wird, dass einige mit der Netzwerksicherheitsbedrohung assoziierte Daten nach dem zukünftigen Rückführen im ersten Datensatz verbleiben werden, Wiederholen der Schritte (i) bis (iii).

9. Computerimplementiertes Verfahren nach Anspruch 8, weiter umfassend, wenn der weitere Datensatz, an den die Daten rückzuführen sind, ein Zwischendatensatz ist:

    iv) Bestimmen an diesem Zwischendatensatz, welches Netzwerkereignis zwischen diesem Zwischendatensatz und den weiteren Datensätzen zuerst aufgetreten ist;
    v) Hinzufügen von Einzelheiten dieses Netzwerkereignisses zu dem forensischen Bericht für die zukünftige Verwendung des Rückführens der mit der Netzwerksicherheitsbedrohung assoziierten Daten, die mit diesem Netzwerkereignis assoziiert sind, an den weiteren Datensatz, der mit diesem Netzwerkereignis assoziiert ist;
    vi) wenn bestimmt wird, dass einige mit der Netzwerksicherheitsbedrohung assoziierte Daten nach dem zukünftigen Rückführen im Zwischendatensatz verbleiben werden, Wiederholen der Schritte (iv) bis (v).

10. Computerimplementiertes Verfahren nach Anspruch 7, wobei, wenn es mehr als einen Quelldatensatz im Netzwerk gibt, der Schritt des Bestimmens einer Prozedur zum Rückführen Folgendes umfasst:

    Identifizieren des Beitrags jedes Netzwerkereignisses zwischen dem ersten Datensatz und den weiteren Datensätzen zu den mit der Netzwerksicherheitsbedrohung am markierten Netzwerkereignis assoziierten Daten; und
    Hinzufügen von Einzelheiten dieser Netzwerkereignisse und ihres Beitrags zu dem forensischen Bericht für die zukünftige Verwendung des Rückführens der mit der Netzwerksicherheitsbedrohung assoziierten Daten, die mit jedem Netzwerkereignis assoziiert sind, an die weiteren Datensätze auf Grundlage ihres identifizierten Beitrags.

11. Computerimplementiertes Verfahren nach Anspruch 10, weiter umfassend, wenn jeder der Datensätze, an die die Daten rückzuführen sind, die ein Zwischendatensatz sind:

    Identifizieren eines Beitrags jedes Netzwerkereignisses zwischen dem Zwischendatensatz und weiteren Datensätzen zu den mit der Netzwerksicherheitsbedrohung assoziierten Daten am Zwischendatensatz;
    Hinzufügen von Einzelheiten dieser Netzwerkereignisse und ihres Beitrags zu dem forensischen Bericht für die zukünftige Verwendung des Rückführens der mit der Netzwerksicherheitsbedrohung assoziierten Daten, die mit jedem Netzwerkereignis assoziiert sind, an die weiteren Datensätze auf Grundlage ihres identifizierten Beitrags.

12. Computerimplementiertes Verfahren nach einem der Ansprüche 7 bis 11, Rückführen der Daten auf Grundlage der bestimmten Prozedur zum Rückführen.

13. System (700), das zur forensischen Analyse und Bestimmung eines mit einer Netzwerksicherheitsbedrohung assoziierten finanziellen Netzwerks konfiguriert ist, wobei die Netzwerksicherheitsbedrohung die nicht autorisierte Modifizierung von Routing-Informationen innerhalb des finanziellen Netzwerks ist, wobei das System Folgendes umfasst:

    ein Identifizierungsmodul (707), das konfiguriert ist, um Einzelheiten eines markierten Netzwerkereignisses zu erhalten, umfassend Daten, die mit der Netzwerksicherheitsbedrohung assoziiert sind,
    wobei das Netzwerkereignis zwischen dem ersten Datensatz und einem Zieldatensatz liegt;

ein Verfolgungsmodul (709), das konfiguriert ist, um die mit der Netzwerksicherheitsbedrohung assoziierten Daten von dem ersten Datensatz bis zu einem weiteren Datensatz zu verfolgen, wobei das Verfolgen ein Erhalten von Einzelheiten von vergangenen Netzwerkereignisse zwischen dem ersten Datensatz und dem weiteren Datensatz beinhaltet;

ein Datensatztyp-Bestimmungsmodul (711), das konfiguriert ist, um Einzelheiten jedes des weiteren Datensatzes mit vorab definierten Kriterien zu vergleichen, um zu identifizieren, ob der weitere Datensatz ein Zwischendatensatz oder ein Quelldatensatz ist, aus dem die Daten stammen;

ein Modul zum Erzeugen eines forensischen Berichts (713), das konfiguriert ist, um einen forensischen Bericht, umfassend Einzelheiten des bestimmten Netzwerks, das mit der Sicherheitsbedrohung assoziiert ist, auszugeben, wenn der weitere Datensatz als Quelldatensatz bestimmt wird.

14. System nach Anspruch 13, weiter konfiguriert, um das Verfahren nach einem der Ansprüche 1 bis 12 durchzuführen.

15. Nichtflüchtiges computerlesbares Speichermedium mit darauf gespeicherten Anweisungen, die, wenn sie von einem Prozessor ausgeführt werden, den Prozessor veranlassen, das Verfahren nach einem der Ansprüche 1 bis 12 durchzuführen.

**Revendications**

1. Procédé mis en œuvre par ordinateur pour analyser judiciairement et déterminer un réseau financier associé à une menace de sécurité de réseau, dans lequel la menace de sécurité de réseau est la modification non autorisée d'informations de routage dans le réseau financier, le procédé comprenant :

a) l'obtention (201) de détails d'un événement de réseau signalé comprenant des données associées à la menace de sécurité de réseau, l'événement de réseau étant entre un premier ensemble de données et un ensemble de données de destination ;
b) le traçage (203) des données associées à la menace de sécurité de réseau depuis le premier ensemble de données vers un autre ensemble de données, le traçage impliquant l'obtention de détails d'au moins un événement de réseau antérieur entre le premier ensemble de données et l'autre ensemble de données ;
c) la comparaison (205) de détails de l'autre ensemble de données à des critères prédéfinis pour identifier si l'autre ensemble de données est un ensemble de données intermédiaire ou un ensemble de données source duquel provenaient les données et l'ajout des détails de l'autre ensemble de données à un rapport judiciaire ;
d) la sortie (207) du rapport judiciaire.

2. Procédé mis en œuvre par ordinateur selon la revendication 1, comprenant en outre
si l'autre ensemble de données est identifié comme étant un ensemble de données intermédiaire, la répétition des étapes b) à c) en partant de l'ensemble de données intermédiaire jusqu'à ce qu'un ensemble de données source associé à l'ensemble de données intermédiaire soit identifié, ou si l'autre ensemble de données est identifié comme étant un ensemble de données source, l'ajout de détails de l'ensemble de données source au rapport judiciaire comprenant des détails du réseau déterminé associé à la menace de sécurité.

3. Procédé mis en œuvre par ordinateur selon la revendication 1 ou revendication 2, comprenant en outre, une fois qu'au moins un ensemble de données source a été identifié :

en partant du au moins un ensemble de données source ou de son ensemble de données intermédiaire associé, le traçage (401) des données associées à la menace de sécurité de réseau pour identifier un ou plusieurs ensembles de données qui sont différents du premier et de l'autre ensembles de données, le traçage impliquant l'identification d'événements de réseau qui amène les un ou plusieurs ensembles de données à inclure les données associées à la menace de sécurité de réseau ;
l'ajout (403) des un ou plusieurs ensembles de données identifiés au rapport judiciaire.

4. Procédé mis en œuvre par ordinateur selon une quelconque revendication précédente, dans lequel les critères prédéfinis sont un ou plusieurs parmi : s'il y a d'autres quelconques événements de réseau antérieurs associés aux données arrivant au niveau de l'autre ensemble de données, le nombre d'événements de réseau antérieurs qui étaient associés à un transfert de données vers ou depuis l'autre ensemble de données, la différence de temps entre des événements de réseau antérieurs qui étaient associés au transfert de données vers ou depuis l'autre ensemble de données, la durée de présence des données dans l'autre ensemble de données, un emplacement géographique associé à l'autre ensemble de données.

5. Procédé mis en œuvre par ordinateur selon une quelconque revendication précédente, dans lequel les détails du réseau déterminé associé à la menace de sécurité comprend une carte du réseau, et/ou une liste d'événements de réseau antérieurs entre les ensembles de données identifiés.

**6.** Procédé mis en œuvre par ordinateur selon une quelconque revendication précédente, dans lequel l'étape d'obtention (203) de détails d'événements de réseau antérieurs entre le premier ensemble de données et l'autre ensemble de données implique l'identification d'événements de réseau antérieurs qui tombent dans une période de temps prédéfinie.

**7.** Procédé mis en œuvre par ordinateur selon une quelconque revendication précédente, comprenant en outre la détermination d'une procédure pour renvoyer les données associées à la menace de sécurité de réseau au niveau de l'événement de réseau signalé à chacun des ensembles de données sources identifiés.

**8.** Procédé mis en œuvre par ordinateur selon la revendication 7, dans lequel, lorsqu'il y a plus d'un ensemble de données source dans le réseau, l'étape de détermination d'une procédure de renvoi comprend :

i) la détermination de l'événement de réseau entre le premier ensemble de données et les autres ensembles de données qui s'est produit en premier ;
ii) l'ajout de détails de cet événement de réseau au rapport judiciaire pour une utilisation future de renvoi des données associées à la menace de sécurité de réseau associée à cet événement de réseau à l'autre ensemble de données ; et
iii) s'il est déterminé que certaines données associées à la menace de sécurité de réseau resteront dans le premier ensemble de données après le renvoi futur, la répétition des étapes (i) à (iii).

**9.** Procédé mis en œuvre par ordinateur selon la revendication 8, comprenant en outre, lorsque l'autre ensemble de données auquel doivent être renvoyées les données est un ensemble de données intermédiaire :

iv) la détermination, au niveau de cet ensemble de données intermédiaire, de l'événement de réseau entre cet ensemble de données intermédiaire et l'autre ensemble de données qui s'est produit en premier ;
v) l'ajout de détails de cet événement de réseau au rapport judiciaire pour une utilisation future de renvoi des données associées à la menace de sécurité de réseau associée à cet événement de réseau à l'autre ensemble de données associé à cet événement de réseau ;
vi) s'il est déterminé que certaines données associées à la menace de sécurité de réseau resteront dans l'ensemble de données intermédiaire après le renvoi futur, la répétition des étapes (iv) à (vi).

**10.** Procédé mis en œuvre par ordinateur selon la revendication 7, dans lequel, lorsqu'il y a plus d'un ensemble de données source dans le réseau, l'étape de détermination d'une procédure de renvoi comprend :

l'identification de la contribution que chaque événement de réseau entre le premier ensemble de données et les autres ensembles de données a eu sur les données associées à la menace de sécurité de réseau au niveau de l'événement de réseau signalé ; et
l'ajout de détails de ces événements de réseau et de leur contribution au rapport judiciaire pour une utilisation future de renvoi des données associées à la menace de sécurité de réseau associée à chaque événement de réseau aux autres ensembles de données sur la base de leur contribution identifiée.

**11.** Procédé mis en œuvre par ordinateur selon la revendication 10, comprenant en outre, pour chacun des ensembles de données auxquels doivent être renvoyées les données qui sont un ensemble de données intermédiaire :

l'identification d'une contribution que chaque événement de réseau entre l'ensemble de données intermédiaire et d'autres ensembles de données a eu sur les données associées à la menace de sécurité de réseau au niveau de l'ensemble de données intermédiaire ;
l'ajout de détails de ces événements de réseau et de leur contribution au rapport judiciaire pour une utilisation future de renvoi des données associées à la menace de sécurité de réseau associée à chaque événement de réseau aux autres ensembles de données sur la base de leur contribution identifiée.

**12.** Procédé mis en œuvre par ordinateur selon l'une quelconque des revendications 7 à 11, renvoyant les données sur la base de la procédure de renvoi déterminée.

**13.** Système (700) configuré pour analyser judiciairement et déterminer un réseau financier associé à une menace de sécurité de réseau, dans lequel la menace de sécurité de réseau est la modification non autorisée d'informations de routage dans le réseau financier, le système comprenant :

un module d'identification (707) configuré pour obtenir un détail d'un événement de réseau signalé comprenant des données associées à la menace de sécurité de réseau,
l'événement de réseau étant entre un premier ensemble de données et un ensemble de données de destination ;
un module de traçage (709) configuré pour tracer les données associées à la menace de sécurité de réseau depuis le premier ensemble de données vers un autre ensemble de données, le traçage impliquant l'obtention de détails d'événements de réseau antérieurs entre le premier ensemble de données et l'autre ensemble de données ;
un module de détermination (711) de type d'ensemble de données configuré pour comparer les détails de chacun de l'autre ensemble de données à des critères prédéfinis pour identifier si l'autre ensemble de données est un ensemble de données intermédiaire ou un ensemble de données source duquel provenaient les données ;
un module de génération (713) de rapport judiciaire configuré pour délivrer en sortie un rapport judiciaire comprenant des détails du réseau déterminé associé à la menace de sécurité lorsque l'autre ensemble de données est identifié comme étant un ensemble de données source.

14. Système selon la revendication 13, configuré en outre pour mettre en œuvre le procédé selon l'une quelconque des revendications 1 à 12.

15. Support de stockage non transitoire lisible par ordinateur stockant des instructions qui, lorsqu'elles sont mises en œuvre par un processeur, amènent le processeur à mettre en œuvre le procédé selon l'une quelconque des revendications 1 à 12.

FIG. 1

200

201 — Obtaining details of a flagged network event comprising data associated with a network security threat, the network event being between a first dataset and a destination dataset.

203 — Tracing the data associated with the network security threat from the first dataset to a further dataset, the tracing involving obtaining details of at least one past network event between the first dataset and the further dataset.

205 — Comparing details of the further dataset to predefined criteria to identify whether the further dataset is an intermediate dataset or a source dataset from which the data originated and adding the details of the further dataset to a forensic report.

207 — Outputting the forensic report.

FIG. 2

FIG. 3

400

401 Starting from the at least one source dataset or its associated intermediate dataset , tracing the data associated with the network security threat to identify one or more datasets that are different to the first and further dataset, the tracing involving identifying network events which led the one or more datasets to including the data associated with the network security threat.

403 Adding the identified one or more datasets to the forensic report.

FIG. 4

FIG. 5

FIG. 6

700

701

Database

705

703

Security Threat
Detection Software

Dataset identifying module — 707

Data tracing module — 709

Dataset type determining module — 711

Forensic report generating module — 713

Dataset reconstructing module — 715

FIG. 7

800 Data processing device

810      Memory

805      Processor

815      Comms interface

820      Storage interface

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180367548 A1
- US 10326673 B2